# EUROPEAN PATENT APPLICATION

(11) **EP 4 711 270 A1**
(43) Date of publication of application: **18.03.2026**
(21) Application number: 24199666.9
(22) Date of filing: 11.09.2024
(51) Int. Cl.: B64C 25/52, B64C 25/32

(54) **A SKID-TYPE LANDING GEAR FOR A ROTORCRAFT**

(71) Applicant: AIRBUS HELICOPTERS DEUTSCHLAND GmbH, 86609 Donauwörth (DE)
(72) Inventor: KUNTZE-FECHNER, Gerald, 83703 GMUND AM TEGERNSEE (DE); OTTO, Hans, 86641 RAIN AM LECH (DE); MAIER, Tom, 72202 NAGOLD (DE); RUPPRECHT, Klaus, 86681 FÜNFSTETTEN (DE); BRABAND, Frederik, 86152 AUGSBURG (DE); KURTI, Ermal, 86154 AUGSBURG (DE); RINKER, Markus, 86456 GABLINGEN (DE)
(74) Representative: GPI Brevets

(57) **Abstract**

The invention relates to a skid-type landing gear (10) for a rotorcraft (1), which comprises at least two skids (11) which are connected to each other via at least two cross tubes (13). Each cross tube (14) is connected to the skids (12) via connecting components (17), each comprising a pressure plate (17b). The pressure plates (17b) are respectively attached to the skids (12) by means of vertical attachments (29) via a predetermined number of fasteners (22). The vertical attachments (29) are configured to enable load transfer from the cross tubes (14) to the skids (12) by tension in the predetermined number of fasteners (22) and by pressure between the pressure plates (17b) and skids (11).

## Description

The invention is related to a skid-type landing gear for a rotorcraft. The invention is further related to a rotorcraft with such a skid-type landing gear.

In general, skid-type landing gears for rotorcrafts and, more particularly, for light and medium helicopters comprise two longitudinal skids for contacting ground. The two longitudinal skids are usually interconnected via two cross members, such as cross beams or tubes, which are attached to the two longitudinal skid tubes via suitable attachment means. The two cross beams or tubes are further attached to a fuselage of an associated helicopter.

By way of example, the document EP 2 450 677 A1 describes a skid-type landing gear comprising a bow shaped front strut and a bow-shaped rear strut. The skid-type landing gear comprises skids connected to respective ends on either side of the struts. Each of the bow-shaped struts is fixed by means of two flanges to a fuselage of a helicopter. The skids, in turn, are connected to the struts via steel clamps.

Another illustrative skid-type landing gear for a helicopter is described in the document US 2002/0008175 A1. The skid-type landing gear includes a pair of skids and a pair of generally U-shaped cross members, i. e. a forward cross member and an aft cross member. The forward and aft cross members each have a first leg and a second leg which are downturned towards the skids and attached to the skids via respective attachment means which form so-called skid shoes.

In any case, skid-type landing gears are generally designed for various landing conditions and must comply with applicable aviation regulations such that they are suitable for a required energy absorption during hard landings. Accordingly, the connections between respective cross beams or tubes and associated skid tubes are key elements which must be adapted to withstand the loading as well the rough conditions in service, e. g. corrosion, wear, different environments, deforming, maintenance aspects and exchangeability. Usually, the cross beams or tubes are plugged in the skid shoes from top. At their connection to the skid tubes various possibilities are used for the fixation.

For instance, in the skid-type landing gear described in the above-mentioned document US 2002/0008175 A1 the skid shoes form saddle-type attachments which have an upper portion and a lower portion. The lower portion includes a pair of opposing strap members that straddle the skids. The strap members are adapted for fastening to the skids via provision of a plurality mounting apertures located on each strap member. Respective mounting apertures are aligned along axes that are radial to the skids such that a selected angle of about 150° is formed between the axes.

Similarly, the document CN 218 317 301 U describes a skid-type landing gear comprising skids and brackets of the saddle-type which form saddle-type attachments. The parts for interconnecting the skids and the brackets comprise fasteners which are located at two angularly distanced circumferential positions of the skids. Furthermore, a skid-type landing gear with skids, which uses such saddle-type attachments to connect cross tubes to the skids, is also described in the document EP 0 725 746 B1.

The documents CA 2 842 596 A1 and US 2016/0244155 A1 each describe a skid-type landing gear with skids having an inboard flat side wall and an outboard flat side wall. According to the document US 2016/0244155 A1, the skids have flat side walls and respective cross tubes are each coupled to the skids with saddle-type attachments. Each saddle-type attachment includes an outboard planar portion and an inboard planar portion with a middle portion therebetween. The outboard planar portion is adjacent and parallel to the outboard flat side wall of the skid, and the inboard planar portion is adjacent and parallel to the inboard flat side wall of the skid. A line of fasteners is used to attach the saddle-type attachments to the cross tubes. The fasteners are located along a crest line where the saddle-type attachments contact the outside diameter of the cross tubes. The fasteners are used to couple the saddle-type attachments to the flat side walls of the skids.

However, all attachment means and skid shoes described above are comparatively complicated and/or involve implementation of lateral connections with shear bolts and/or bushings which require complex installations with a large number of components, thus, complicating or preventing exchangeability of the skids of the respective skid-type landing gears.

It is, therefore, an object of the present invention to provide a new skid-type landing gear with new attachment means, which is suitable to overcome the above-described drawbacks and problems of the state-of-the-art.

This object is solved by a skid-type landing gear for a rotorcraft comprising the features of claim 1. More specifically, according to the present invention the skid-type landing gear comprises at least two skids which are connected to each other via at least two cross tubes. At least one of the at least two cross tubes is connected to at least one of the at least two skids via a connecting component that comprises a pressure plate. The pressure plate is attached to the at least one of the at least two skids by means of a vertical attachment via a predetermined number of fasteners. The vertical attachment is configured to enable load transfer from the at least one of the at least two cross tubes to the at least one of the at least two skids by tension in the predetermined number of fasteners and by pressure between the pressure plate and the at least one of the at least two skids.

Advantageously, the inventive skid-type landing gear provides for an improved attachment of skid shoes to associated skids. More specifically, instead of using the above-described lateral attachments with shear bolts, the inventive skid-type landing gear uses vertical attachments of skid shoes in which respective bolt connections with tension bolts are located on the upper area of the skids, in front and aft of each cross tube. Thus, the load transfer between the skids and the cross tubes is no more done via shear loads, but instead by tension in the tension bolts and pressure between the skid shoes and the skids via a direct load path from the cross tubes to the skids. Preferably, one or more tension bolts are respectively provided in front and aft of each cross tube.

Such a vertical attachment using e. g. tension bolts requires less attachment components and shorter screws may be used as tension bolts so that the vertical attachment is more compact and has lower weight and implies lower costs. Furthermore, the attachment components are easy to assemble, e. g. a pre-installed anchor nut plate placed inside the skid and the skid shoe placed outside on the skid may be assembled by easy torquing of the tension bolts.

Advantageously, with the vertical attachment, the lower area of the skids may be completely free for the design of the skid protectors, such as steel parts, which are frequently exchanged by customers. Furthermore, the inventive skid-type landing gear is aerodynamically "clean" without large disturbances and optically pleasant. Moreover, as skid-type landing gears are usually used for carrying various outboard equipment, e. g. floats, snow or settling protectors, lights, and cameras, the vertical attachment provides for an increased design space for the attachment of such equipment. In addition, it allows for easy kink positioning in the skids.

Furthermore, the lower area of the skids is always in contact with the ground at every landing. Thus, provision of the vertical attachments is especially an advantage at a tough and bumpy ground with uneven surface, where no attachment means are located sideward of the skids which may interfere with the ground surface.

In general, skid-type landing gears are affected by rough environments. In hard landings the aft cross tube may be plastically deformed. Such deformations are allowed and may occur repeatedly during service operations. However, with such deformations a proper replacement must be guaranteed. In an illustrative realization, at the aft position of the skids, elongated holes and a "gliding" anchor nut plate may be provided. Advantageously, such arrangement enables turning movements between skids and skid shoes of about 5°, thus ensuring replacement of the parts.

Furthermore, skid-type landing gears affected by rough environment may undergo corrosion. Excessive corrosion often occurs especially at connections with different materials. Therefore, the anchor nut plate may be made of glass fabrics and would be protected against corrosion as it is only in contact with the inner part of the skids. i. e. the skid tubes. In addition, a protection sheet between the skid shoe and the skid advantageously separates both parts that are made of e. g. aluminum and, therefore, the probability of friction corrosion is significantly lowered.

According to one aspect of the present invention, the at least one of the at least two skids comprises a ground contact surface area and a diametrically opposed free surface area to which the pressure plate is attached.

Preferably, the fasteners are tension bolts provided for load transfer by tension.

According to one aspect, the predetermined number may amount at least to four.

According to one aspect, the at least one of the at least two skids may comprise a longitudinal extension.

Preferably, the predetermined number of fasteners comprises at least two tension bolts which are arranged in the longitudinal extension in front of the at least one of the at least two cross tubes, and at least two other tension bolts which are arranged in the longitudinal extension aft of the at least one of the at least two cross tubes.

According to one aspect, the at least two tension bolts may form an included angle of at most 60°, preferably of at most 45°.

According to one aspect, the at least two other tension bolts may form an included angle of at most 60°, preferably of at most 45°.

According to one aspect, the pressure plate may be curved with a curvature angle of at most 130°.

According to one aspect, the at least one of the at least two skids may be tubular.

Preferably, an anchor nut plate is arranged inside of the at least one of the at least two skids for attachment to the predetermined number of fasteners.

According to one aspect, the anchor nut plate may be provided with a predetermined number of anchor nuts for fixation of the predetermined number of fasteners.

Preferably, the anchor nut plate comprises a first plate section and a second plate section that is connected to the first plate section via a bridging web.

According to one aspect, the first plate section may be attached to the at least two tension bolts.

According to one aspect, the second plate section may be attached to the at least two other tension bolts.

According to one aspect, the bridging web may be attached to the at least one of the at least two skids by means of an associated web fixation bolt.

According to one aspect, the bridging web may be glidingly arranged in a cage that is attached to the at least one of the at least two skids by means of associated cage fixation bolts.

Preferably, the cage is configured to allow gliding of the bridging web in the cage in circumferential direction of the at least one of the at least two skids.

According to one aspect, the anchor nut plate may comprise glass fabrics.

According to one aspect, the at least one of the at least two skids may comprise metal, in particular aluminum.

According to one aspect, the at least one of the at least two cross tubes may comprise metal, in particular aluminum.

According to one aspect, the connecting component may comprise metal, in particular aluminum.

According to one aspect, the connecting component may comprise composite material, in particular a carbon fiber reinforced polymer.

Furthermore, a rotorcraft may be provided with the skid-type landing gear described above.

Preferred embodiments of the invention are outlined by way of example in the following description with reference to the attached drawings. In these attached drawings, identical or identically functioning components and elements are labelled with identical reference numbers and characters and are, consequently, only described once in the following description.
- Figure 1 shows a lateral view of an illustrative rotorcraft,
- Figure 2 shows a lateral view of an illustrative skid-type landing gear of the rotorcraft of Figure 1,
- Figure 3 shows a perspective view of a front skid shoe section of the skid-type landing gear of Figure 2,
- Figure 4 shows a perspective view of a front skid shoe of the front skid shoe section of Figure 3,
- Figure 5 shows a sectional view of the front skid shoe section of Figure 3,
- Figure 6 shows an enlarged perspective view of the front skid shoe section of Figure 3,
- Figure 7 shows a perspective view of a rear skid shoe section of the skid-type landing gear of Figure 2,
- Figure 8 shows a perspective view of an illustrative anchor nut plate mounted on a skid at the front skid shoe section of Figure 6,
- Figure 9 shows a perspective view of the anchor nut plate of Figure 8,
- Figure 10 shows a perspective view of an illustrative anchor nut plate mounted on a skid at the rear skid shoe section of Figure 7,
- Figure 11 shows an enlarged view of the front skid shoe of Figure 6,
- Figure 12 shows a sectional view of the front skid shoe cut along line XII-XII of Figure 11, and
- Figure 13 shows a sectional view of the front skid shoe cut along line XIII-XIII of Figure 11.

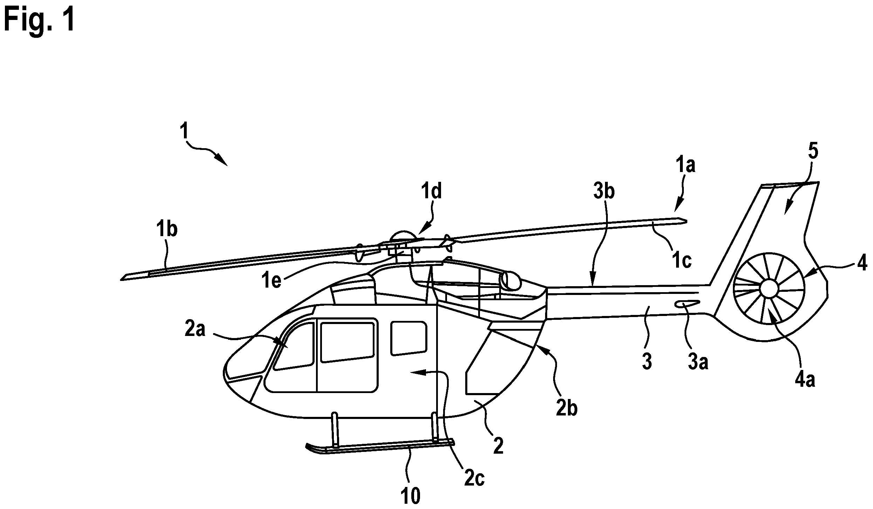

Figure 1 shows a rotorcraft 1 that is exemplarily illustrated as a helicopter. Thus, for purposes of simplicity and clarity, the rotorcraft 1 is hereinafter referred to as the "helicopter 1". The present invention is, however, not limited to helicopters and may likewise be applied to any other rotorcraft.

Illustratively, the helicopter 1 comprises at least one main rotor 1a, preferably a multi-blade main rotor, for providing lift and forward or backward thrust during operation. By way of example, the at least one main rotor 1a comprises a plurality of rotor blades which are connected at an associated rotor head 1d to a rotor shaft 1e, which rotates in operation of the helicopter 1 about an associated rotor axis. Two rotor blades of the plurality of rotor blades are visible in Figure 1 and separately labelled with the reference signs 1b, 1c.

Furthermore, the helicopter 1 comprises a fuselage 2 that preferably forms an aircraft interior region 2a. Illustratively, a lefthand side 2c of the fuselage 2 is shown and, thus, a portside wall of the fuselage 2 of the helicopter 1, to which a landing gear 10 of the skid-type is attached, by way of example. The aircraft interior region 2a may accommodate a cockpit and may further accommodate a cabin for passengers and/or cargo.

By way of example, a tail boom 3 with a horizontal stabilizer 3a is connected at a rear fuselage 2b to the fuselage 2 of the helicopter 1. The tail boom 3 is illustratively implemented as a slim beam element that comprises at least a tubular tail boom cone 3b.

The helicopter 1 illustratively further comprises at least one preferentially shrouded counter-torque device 4 configured to provide counter-torque during operation, i. e. to counter the torque created by rotation of the at least one main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a fin 5.

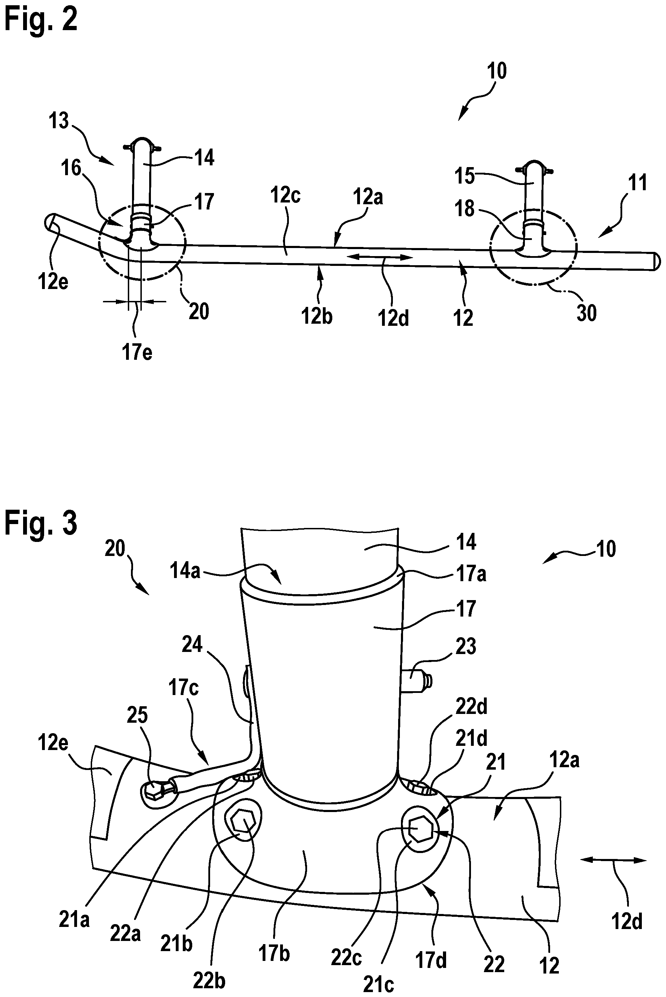

Figure 2 shows the skid-type landing gear 10 of Figure 1 viewed from the left side of the helicopter 1. The skid-type landing gear 10 comprises at least two skids 11 which are connected to each other via at least two cross tubes 13. Illustratively, only a left side skid 12 of the at least two skids 11 is visible and attached via associated skid shoes 16 to the at least two cross tubes 13. The associated skid shoes 16 and/or the at least two cross tubes 13 may comprise metal, in particular aluminum.

By way of example, the at least two cross tubes 13 comprise a front cross tube 14 and a rear cross tube 15 which are illustratively attached via two connecting components, in particular left side front and rear skid shoes 17, 18 of the associated skid shoes 16, to the left side skid 12. However, the cross tubes 13 are preferably also attached to a respective right side skid of the at least two skids 11 via corresponding right side skid shoes. Preferably, the left side and the right side of the skid-type landing gear 10 are symmetrical and embodied with substantially identical structures and components. Therefore, the left side skid 12, the left side skid shoes 16, and the left side of the cross tubes 13 are representatively described for the complete skid-type landing gear 10 hereinafter in more detail.

Illustratively, the left side skid 12 has a longitudinal extension 12d and comprises a ground contact surface area 12b and a diametrically opposed free surface area 12a. It should, however, be noted that the free surface area 12a and the ground contact surface area 12b do not necessarily have to be two equal surface areas, but rather two opposite surface areas at the upper and lower portions, respectively, of the left side skid 12. By way of example, the surface area 12a is a rotor blade facing upper skid surface area when the skid-type landing gear 10 is mounted to the helicopter 1 of Figure 1, whereas the surface area 12b is a ground facing surface when the helicopter 1 is landed on ground, i. e. a surface that is in contact with ground when the helicopter 1 is positioned on ground.

By way of example, the left side skid 12 comprises a kinked portion 12e. If desired, the left side skid 12 with the kinked portion 12e may be manufactured in one piece as an integral skid tube 12c. In other words, the skid tube 12c may be manufactured with a bending front section forming the kinked portion 12e. By way of example, the kinked portion 12e may be bent at e. g. an angle of 21° upwards from the longitudinal extension 12d.

Illustratively, a respective bending point of the kinked portion 12e is located at a left side front skid shoe section 20 roughly under a front edge of the left side front skid shoe 17. By way of example, a kink distance 17e from the bending point to a centerline of the front cross tube 14 at the left side front skid shoe section 20 may be 140 mm. At a left side rear skid shoe section 30, the rear cross tube 15 is connected to the left side skid 12 via the left side rear skid shoe 18.

The left side skid 12 may comprise metal. Preferably, the left side skid 12 is made of aluminum.

Figure 3 shows the left side front skid shoe section 20 of the skid-type landing gear 10 of Figure 2, where the front cross tube 14 is connected to the left side skid 12 at the upper skid surface area 12a via an associated connecting component, i. e. the left side front skid shoe 17.

Illustratively, the left side front skid shoe 17 comprises a pressure plate 17b. The pressure plate 17b may be implemented as a curved skid connecting pressure plate. Furthermore, the pressure plate 17b is illustratively attached to the upper skid surface area 12a of the left side skid 12.

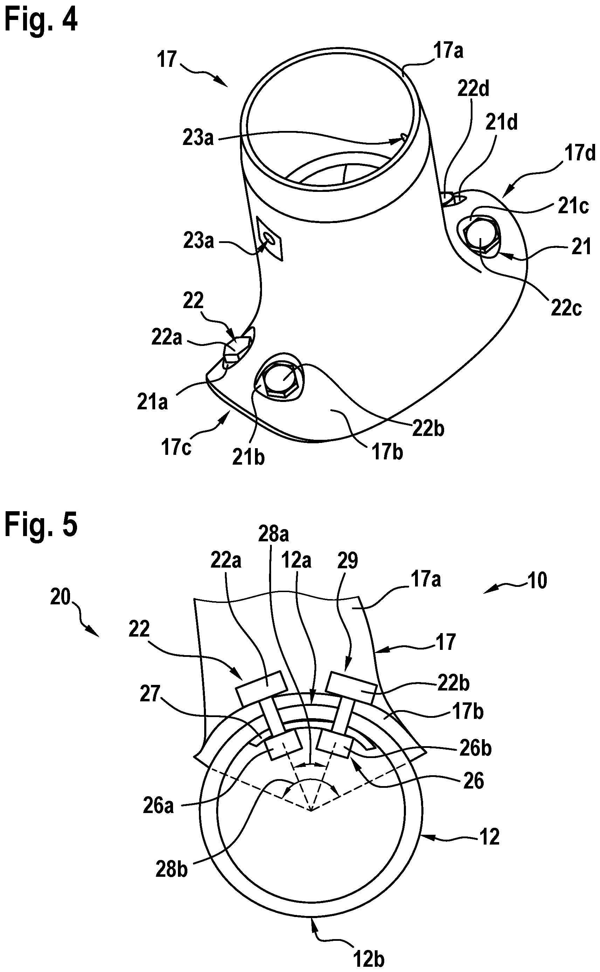

More specifically, the pressure plate 17b is attached to the left side skid 12 by means of a vertical attachment (e. g. vertical attachment 29 in Figure 5) via a predetermined number of fasteners 22. Illustratively, the fasteners 22 are tension bolts, i. e. bolts which are provided for load transfer by tension. The predetermined number preferably amounts at least to four.

By way of example, the predetermined number of fasteners 22 comprises at least two tension bolts 22a, 22b which are arranged in the longitudinal extension 12d of the left side skid 12 in front of the front cross tube 14. Illustratively, the predetermined number of fasteners 22 further comprises at least two other tension bolts 22c, 22d which are arranged in the longitudinal extension 12d aft of the front cross tube 14.

More specifically, fixation openings 21 which are illustratively implemented as four individual fixation openings 21a, 21b, 21c, 21d are provided on the pressure plate 17b for receiving the fasteners 22, which are illustratively implemented as four individual tension bolts 22a, 22b, 22c, 22d.

Above the pressure plate 17b, the left side front skid shoe 17 further comprises a cross tube connecting section 17a for receiving a front cross tube end section 14a of the front cross tube 14. A cross tube to skid shoe fixation bolt 23 which illustratively traverses the left side front skid shoe 17 from a front side 17c to a rear side 17d is provided for fixing the cross tube connecting section 17a with the front cross tube end section 14a.

Furthermore, an electrostatic charge conductor cable 24 is illustratively installed at the left side front skid shoe section 20. By way of example, a first end of the electrostatic charge conductor cable 24 may be connected to the front side 17c of the cross tube connecting section 17a at the fixation bolt 23. Illustratively, an electrostatic charge conductor cable fixation bolt 25 may be provided to connect a second end of the electrostatic charge conductor cable 24 to the kinked portion 12e of the left side skid 12.

Figure 4 shows the left side front skid shoe 17 of Figure 3 comprising the pressure plate 17b and the cross tube connecting section 17a. More specifically, the pressure plate 17b is illustrated with four individual fixation openings 21a, 21b, 21c, 21d receiving the respective four tension bolts 22a, 22b, 22c, 22d.

As shown in Figure 4, two fixation bolt accommodations 23a are respectively provided on the front side 17c and the rear side 17d of the cross tube connecting section 17a for accommodating the cross tube to skid shoe fixation bolt 23. Illustratively, the two fixation bolt accommodations 23a are aligned in a line which lies in a vertical plane dividing the left side front skid shoe 17 roughly equally into left and right sections. The two tension bolts 22a, 22b are approximately left to right symmetrically attached to the front side 17c of the pressure plate 17b, and the two tension bolts 22c and 22d are approximately left to right symmetrically attached to the rear side 17d of the pressure plate 17b.

Figure 5 shows the left side front skid shoe section 20 of the skid-type landing gear 10 of Figure 3 for further illustrating a vertical attachment 29 of the left side front skid shoe 17 to the left side skid 12 via the fasteners 22, i. e. illustratively the tension bolts 22a, 22b. More specifically, the pressure plate 17b of the left side front skid shoe 17 is attached to the upper skid surface area 12a of the left side skid 12 by the vertical attachment 29 via the fasteners 22 including the illustrated two tension bolts 22a, 22b. Illustratively, the vertical attachment 29 is configured to enable load transfer from the front cross tube 14 of Figure 3 to the left side skid 12 by tension in the fasteners 22 and by pressure between the pressure plate 17b and left side skid 12. Preferably, the pressure plate 17b is curved with a curvature angle 28b of at most 130°.

As show in Figure 5, the left side skid 12 is preferably tubular. Illustratively, an anchor nut plate 27 is introduced into and, consequently, arranged inside of the left side skid 12 for attachment to the fasteners 22. By way of example, a predetermined number of nuts 26 that corresponds to the number of fasteners 22 is provided for fixation of the fasteners 22. For instance, two nuts 26a, 26b are provided for fixation of the two tension bolts 22a, 22b.

Preferably, the two tension bolts 22a, 22b form an included angle 28a of at most 60°, preferentially of at most 45°. As such, the vertical attachment 29 is formed to be in a substantial upright positioning wherein the tension bolts 22a, 22b preferably do not deviate from a vertical direction by more than half of the included angle 28a.

Likewise, the at least two other tension bolts 22c, 22d of Figure 3 may also form an included angle of at most 60°, preferably of at most 45°. As such, the vertical attachment 29 may be formed to be in a substantial upright positioning with respect to the two other tension bolts 22c, 22d. If desired, the vertical attachment 29 may be formed via the four tension bolts 22a, 22b, 22c, 22d.

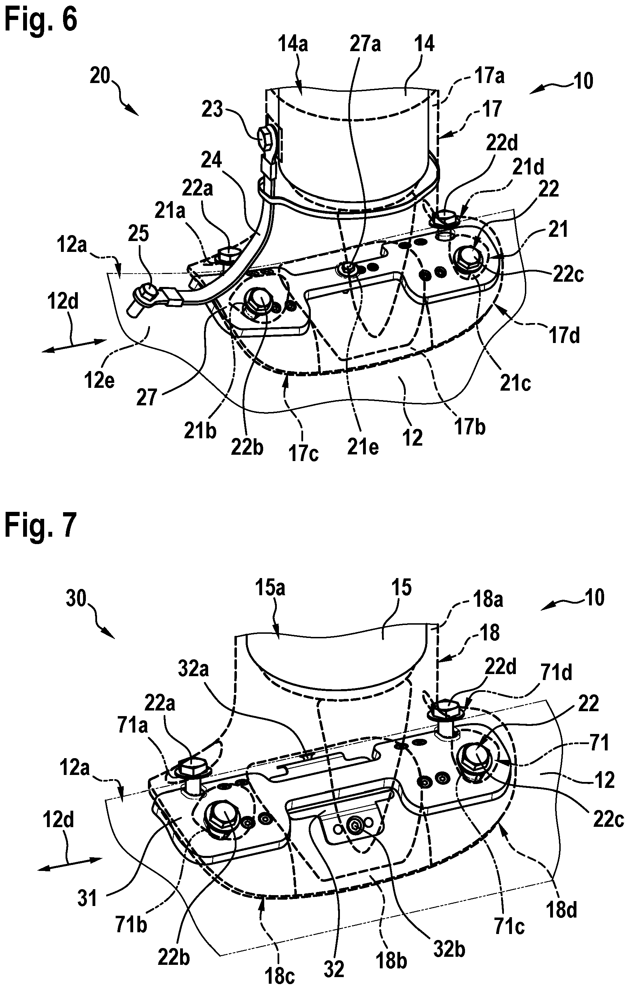

Figure 6 shows the front skid shoe section 20 of Figure 3 with the left side front skid shoe 17 which comprises the cross tube connecting section 17a for receiving the front cross tube end section 14a of the front cross tube 14, as well as the pressure plate 17b that is attached to the left side skid 12 at the upper skid surface area 12a. The anchor nut plate 27 of Figure 5 is arranged inside of the left side skid 12 for attachment to four tension bolts 22a, 22b, 22c, 22d that are provided in the longitudinal extension 12d in front and aft of the front cross tube 14.

Illustratively, the anchor nut plate 27 of the front skid shoe section 20 is a fixed anchor nut plate which is rigidly attached to the left side skid 12. Therefore, an anchor nut plate fixation bolt 27a is provided which fixes the anchor nut plate 27 below the upper skid surface area 12a to the left side skid 12. By way of example, a fixation opening 21e is provided in the left side skid 12 at the upper skid surface area 12a for accommodating the anchor nut plate fixation bolt 27a. If desired, a gliding anchor nut plate may also be provided for attachment to the left side skid 12, as described at Figure 7 below.

Figure 7 shows the rear skid shoe section 30 of the skid-type landing gear 10 of Figure 2. At the rear skid shoe section 30, the left side rear skid shoe 18 may have a structure similar to the left side front skid shoe 17 of Figure 6 and be attached to the left side skid 12 below the upper skid surface area 12a. More specifically, the left side rear skid shoe 18 comprises a cross tube connecting section 18a for receiving the rear cross tube end section 15a of the rear cross tube 15, and a pressure plate 18b that is attached to the left side skid 12 at the upper skid surface area 12a.

Illustratively, an anchor nut plate 31 is arranged inside of the left side skid 12 for attachment to the predetermined number of fasteners 22. The fasteners 22 may be illustratively implemented as the four tension bolts 22a, 22b, 22c, 22d that are provided in the longitudinal extension 12d in front and aft of the rear cross tube 15.

Furthermore, fixation openings 71, which are illustratively implemented as four individual fixation openings 71a, 71b, 71c, 71d may be provided in the left side skid 12 in the region of the pressure plate 18b at a front side 18c and a rear side 18d of the left side rear skid shoe 18 for receiving the four tension bolts 22a, 22b, 22c, 22d. By way of example, the left side skid 12 is provided with the fixation openings 71a, 71b at the front side 18c of the left side rear skid shoe 18 for receiving the tension bolts 22a, 22b, and with the fixation openings 71c, 71d at the rear side 18d of the left side rear skid shoe 18 for receiving the tension bolts 22c, 22d.

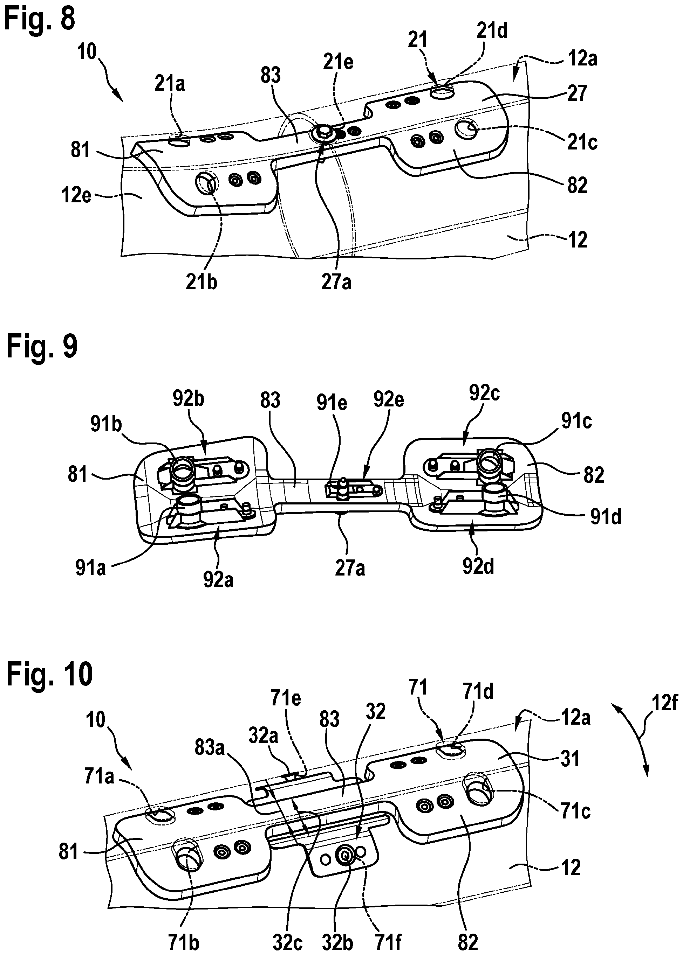

Illustratively, the anchor nut plate 31 is a gliding anchor nut plate. An associated cage 32 is provided for accommodating and limiting gliding movement of the anchor nut plate 31. The gliding movement of the anchor nut plate 31 in the cage 32 is described in detail below at Figure 10.

Preferably, the associated cage 32 is attached to the left side skid 12 by means of associated cage fixation bolts 32a, 32b. Furthermore, the left side rear skid shoe 18 may be installed on the left side skid 12 with polytetrafluoroethylene (PTFE) tape sealing thereon at both front side 18c and rear side 18d to protect surfaces of the left side skid 12 and the left side rear skid shoe 18, i. e. the pressure plate 18b, when relative movement occurs therebetween.

As shown in Figure 6 and Figure 7, the fixed anchor nut plate 27 and the gliding anchor nut plate 31 each have an overall structure of a bridge connecting a front section and a rear section along the longitudinal direction 12d, as described at Figure 8 to Figure 10 below.

Figure 8 shows the anchor nut plate 27 of Figure 6, i. e. the fixed anchor nut plate 27, which is rigidly attached to the left side skid 12 of the skid-type landing gear 10 at the upper skid surface area 12a via the anchor nut plate fixation bolt 27a introduced into the left side skid 12 through the fixation opening 21e. For purposes of illustration, the left side skid 12 is transparent such that an upper side of the anchor nut plate 27 can be seen through the upper skid surface area 12a.

Preferably, the anchor nut plate 27 comprises glass fabrics. Thus, galvanic corrosion between the anchor nut plate 27 and the left side skid 12, which preferably comprises metal, such as aluminum, may advantageously be prevented.

Illustratively, the anchor nut plate 27 comprises a first plate section 81 and a second plate section 82 that is connected to the first plate section 81 via a bridging web 83. By way of example, the first plate section 81 is provided with two fixation openings 21a, 21b for receiving two tension bolts. The first plate section 81 may be attached to the tension bolts 22a, 22b of Figure 6. Likewise, the second plate section 82 is provided with two fixation openings 21c, 21d for receiving two tension bolts. The second plate section 82 may be attached to the tension bolts 22c, 22d of Figure 6.

Preferably, the fixation opening 21e is provided on the bridging web 83. For instance, the fixation opening 21e may be positioned at least approximately in a center position of the anchor nut plate 27 for receiving the anchor nut plate fixation bolt 27a. Accordingly, the bridging web 83 is illustratively retained at the left side skid 12 by means of the associated web fixation bolt 27a.

Figure 9 shows the anchor nut plate 27 of Figure 8 seen from below, i. e. showing a lower side thereof. Preferably, the anchor nut plate 27 is provided with a predetermined number of anchor nuts for fixation of a predetermined number of fasteners. Illustratively, four anchor nuts 91a, 91b, 91c, 91d are pre-mounted to the anchor nut plate 27. By way of example, two anchor nuts 91a, 91b are provided on the anchor nut plate front section 81 and attached thereto with nut fixation means 92a, 92b. Likewise, two other anchor nuts 91c, 91d may be provided on the anchor nut plate rear section 82 and attached thereto with nut fixation means 92c, 92d.

Furthermore, a fixation nut 91e may be provided on the anchor nut plate 27 for fixation of the anchor nut plate fixation bolt 27a of Figure 8. Illustratively, the fixation nut 91e is attached to the bridging web 83 with associated nut fixation means 92e.

The nut fixation means 92a, 92b, 92c, 92d, 92e may be any means which are suitable to attach the anchor nuts 91a, 91b, 91c, 91d to the anchor nut plate 27. For instance, the nut fixation means 92a, 92b, 92c, 92d, 92e may comprise clamping means, press fit means, gluing means, and so on.

Figure 10 shows the anchor nut plate 31 of Figure 7, i. e. the gliding anchor nut plate 31, which comprises the first and second plate sections 81, 82 and the bridging web 83, and which is mounted to the left side skid 12 of the skid-type landing gear 10 at the upper skid surface area 12a. Similar to Figure 8, the left side skid 12 is transparent for purposes of illustration such that an upper side of the anchor nut plate 31 can be seen through the upper skid surface area 12a.

Preferably, the anchor nut plate 31 comprises glass fabrics. Thus, galvanic corrosion between the anchor nut plate 31 and the left side skid 12, which preferably comprises metal, such as aluminum, may advantageously be prevented.

Illustratively, the anchor nut plate 31 is accommodated in the cage 32 of Figure 7, which is provided for limiting gliding movement of the anchor nut plate 31. The cage 32 is rigidly attached to the left side skid 12 at the upper skid surface area 12a by means of associated cage fixation bolts 32a, 32b for accommodating the bridging web 83 of the anchor nut plate 31. Illustratively, the bridging web 83 is glidingly arranged in the cage 32. By way of example, two fixation openings 71e, 71f may be provided in the left side skid 12 for accommodating the associated cage fixation bolts 32a, 32b.

More particularly, the cage 32 is configured to allow gliding of the bridging web 83 in the cage 32 in circumferential direction 12f of the left side skid 12. Therefore, the cage 32 is configured with a cage width 32c that is greater than a bridging web width 83a in circumferential direction 12f of the bridging web 83 of the anchor nut plate 31.

In addition, the left side skid 12 may be provided in the region of the first plate section 81 of the anchor nut plate 31 with two fixation openings 71a, 71b which are configured as elongated openings with increased dimensions in circumferential direction 12f of the left side skid 12. Similarly, the left side skid 12 may be provided in the region of the second plate section 82 of the anchor nut plate 31 with two other fixation openings 71c, 71d which are also configured as elongated openings with increased dimensions in the circumferential direction 12f of the left side skid 12. Thus, the fixation openings 71a, 71b, 74c, 71d may be longer in the circumferential direction 12f than a respective diameter of the tension bolts 22a, 22b, 22c, 22d of Figure 7 which are accommodated in the fixation openings 71a, 71b, 74c, 71d, such that a required gliding movement or floatation of the bridging web 83 of the anchor nut plate 31 in the cage 32 is enabled.

The anchor nut plate 31 may be provided with the anchor nuts 91a, 91b, 91c, 91d of Figure 9 similar to the anchor nut plate 27 of Figure 9. Likewise, anchor nuts associated with the cage fixation bolts 32a, 32b may be provided on the anchor nut plate 31.

At this point, it should be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

By way of example, the skid shoes 16 of Figure 2, i. e. the skid shoes 17 and/or 18 of Figure 2 to Figure 7, may comprise composite material, in particular a carbon fiber reinforced polymer, if desired. Thus, during manufacturing of the skid-type landing gear 10 of Figure 2, the skid shoes 16 comprising carbon fiber reinforced polymer may e. g. be wet installed on the aluminum left side skid 12 and connected to the aluminum cross tubes 13.

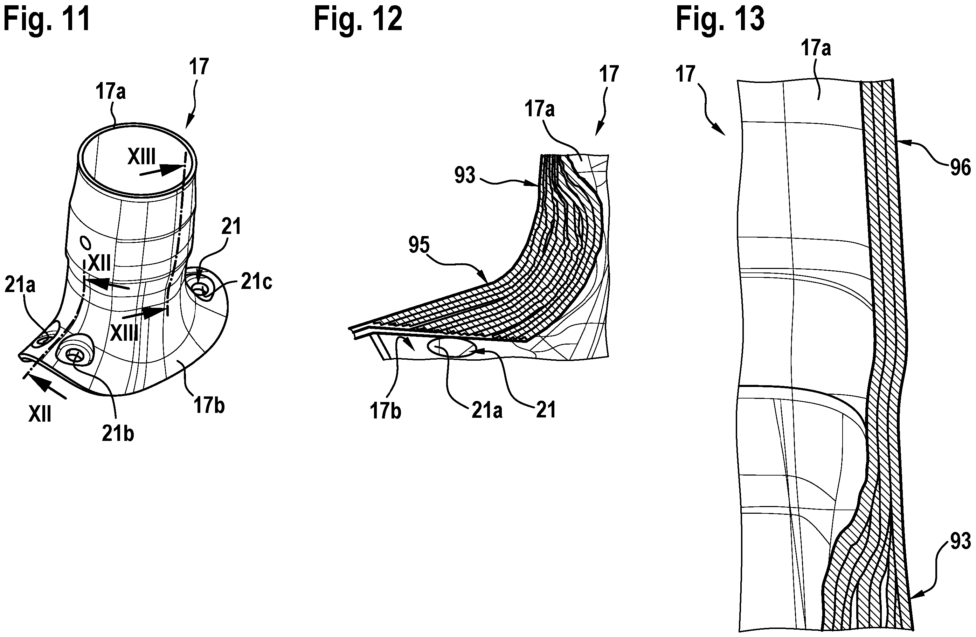

Figure 11 and Figure 12 show the front skid shoe 17 of Figure 6 in an illustrative realization with carbon fiber reinforced polymer. According to Figure 3, the front skid shoe 17 comprises the cross tube connecting section 17a and the pressure plate 17b with the fixation openings 21. Illustratively, the front skid shoe 17 comprises a transfer-stiffening laminate 93 at the cross tube connecting section 17a. The transfer-stiffening laminate 93 may illustratively continue towards the pressure plate 17b toward a stiffener laminate 95.

Advantageously, the transfer-stiffening laminate 93 and the stiffener laminate 95 may comprise spliced UD-tapes, i. e. unidirectional tapes which form a one-directional fiber-reinforced material. Furthermore, e. g. the fixation opening 21a may be located outside the stiffener laminate 95.

Figure 13 shows the cross tube connecting section 17a of the front skid shoe 17 of Figure 11 and Figure 12. Illustratively, the cross tube connecting section 17a comprises a bearing laminate 96 which is joined to the transfer-stiffening laminate 93 of Figure 12. More specifically, the bearing laminate 96 may comprise 50 % of UD-tapes and 45 % of quasi-isotropic laminates.

Other modifications and variations of the above described embodiments are also possible and should, therefore, also be considered as being part of the invention. For instance, according to Figure 4 the pressure plate 17b comprises four individual fixation openings 21a, 21b, 21c, 21d receiving the respective four tension bolts 22a, 22b, 22c, 22d. However, if desired, the pressure plate 17b may be provided with more than four fixation openings 21. For instance, four fixation openings may be provided on the front side 17c of the pressure plate 17b and four other fixation openings may be provided on the rear side 17d of the pressure plate 17b.

### Reference List

1 rotorcraft
1a multi-blade main rotor
1b, 1c rotor blades
1d rotor head
1e rotor shaft
2 fuselage
2a cockpit
2b rear fuselage
2c fuselage portside - rotorcraft left side
3 tail boom
3a horizontal stabilizer
3b tail boom cone
4 counter-torque device
4a tail rotor
5 fin
10 skid-type landing gear
11 skids
12 left side skid
12a rotor blade facing upper skid surface area
12b lower ground contact surface area of skid
12c skid tube
12d longitudinal extension
12e kinked portion
12f circumferential direction of skid
13 cross tubes
14 front cross tube
14a front cross tube end section
15 rear cross tube
15a rear cross tube end section
16 skid shoes
17 left side front skid shoe
17a cross tube connecting section
17b curved skid connecting pressure plate
17c front side
17d rear side
17e kink distance
18 left side rear skid shoe
18a cross tube connecting section
18b curved skid connecting pressure plate
18c front side
18d rear side
20 left side front skid shoe section
21 fixation openings
21a, 21b, 21c, 21d, 21e individual fixation openings
22 tension bolts
22a, 22b, 22c, 22d individual tension bolts
23 cross tube to skid shoe fixation bolt
23a fixation bolt accommodations
24 electrostatic charge conductor cable
25 electrostatic charge conductor cable fixation bolt
26 nuts
26a, 26b individual nuts
27 anchor nut plate
27a anchor nut plate fixation bolt
28a angle included between tension bolts
28b curvature angle
29 vertical attachment
30 left side rear skid shoe section
31 anchor nut plate
32 cage
32a, 32b cage fixation bolts
32c cage width
71 fixation openings
71a, 71b, 71c, 71d, 71e, 71f individual fixation openings
81 anchor nut plate front section
82 anchor nut plate rear section
83 bridging web
83a bridging web width
91a, 91b, 91c, 91d anchor nuts
91e fixation nut
92a, 92b, 92c, 92d, 92e nut fixation means
93 transfer-stiffening laminate
95 stiffener laminate
96 bearing laminate

## Claims

1. A skid-type landing gear (10) for a rotorcraft (1), comprising at least two skids (11) which are connected to each other via at least two cross tubes (13), wherein at least one of the at least two cross tubes (14) is connected to at least one of the at least two skids (12) via a connecting component (17) that comprises a pressure plate (17b), wherein the pressure plate (17b) is attached to the at least one of the at least two skids (12) by means of a vertical attachment (29) via a predetermined number of fasteners (22), wherein the vertical attachment (29) is configured to enable load transfer from the at least one of the at least two cross tubes (14) to the at least one of the at least two skids (12) by tension in the predetermined number of fasteners (22) and by pressure between the pressure plate (17b) and the at least one of the at least two skids (12).

2. The skid-type landing gear (10) of claim 1,
wherein the at least one of the at least two skids (12) comprises a ground contact surface area (12b) and a diametrically opposed free surface area (12a) to which the pressure plate (17b) is attached.

3. The skid-type landing gear (10) of claim 1 or 2,
wherein the fasteners (22) are tension bolts provided for load transfer by tension, and wherein the predetermined number amounts at least to four.

4. The skid-type landing gear (10) of claim 3,
wherein the at least one of the at least two skids (12) comprises a longitudinal extension (12d), and wherein the predetermined number of fasteners (22) comprises at least two tension bolts (22a, 22b) which are arranged in the longitudinal extension (12d) in front of the at least one of the at least two cross tubes (14), and at least two other tension bolts (22c, 22d) which are arranged in the longitudinal extension (12d) aft of the at least one of the at least two cross tubes (14).

5. The skid-type landing gear (10) of claim 4,
wherein the at least two tension bolts (22a, 22b) form an included angle (28a) of at most 60°, preferably of at most 45°, and/or wherein the at least two other tension bolts (22c, 22d) form an included angle of at most 60°, preferably of at most 45°.

6. The skid-type landing gear (10) of any one of the preceding claims,
wherein the pressure plate (17b) is curved with a curvature angle (28b) of at most 130°.

7. The skid-type landing gear (10) of any one of the preceding claims,
wherein the at least one of the at least two skids (12) is tubular, and wherein an anchor nut plate (27) is arranged inside of the at least one of the at least two skids (12) for attachment to the predetermined number of fasteners (22).

8. The skid-type landing gear (10) of claim 7,
wherein the anchor nut plate (27) is provided with a predetermined number of anchor nuts (91a, 91b, 91c, 91d) for fixation of the predetermined number of fasteners (22).

9. The skid-type landing gear (10) of any one of claims 4 to 8,
wherein the anchor nut plate (27) comprises a first plate section (81) and a second plate section (82) that is connected to the first plate section (81) via a bridging web (83), wherein the first plate section (81) is attached to the at least two tension bolts (22a, 22b), and wherein the second plate section (82) is attached to the at least two other tension bolts (22c, 22d).

10. The skid-type landing gear (10) of claim 9,
wherein the bridging web (83) is attached to the at least one of the at least two skids (12) by means of an associated web fixation bolt (27a).

11. The skid-type landing gear (10) of claim 9,
wherein the bridging web (83) is glidingly arranged in a cage (32) that is attached to the at least one of the at least two skids (12) by means of associated cage fixation bolts (32a, 32b).

12. The skid-type landing gear (10) of claim 11,
wherein the cage (32) is configured to allow gliding of the bridging web (83) in the cage (32) in circumferential direction (12f) of the at least one of the at least two skids (12).

13. The skid-type landing gear (10) of any one of claims 7 to 12,
wherein the anchor nut plate (27) comprises glass fabrics.

14. The skid-type landing gear (10) of any one of the preceding claims,
wherein the at least one of the at least two skids (12) and/or the at least one of the at least two cross tubes (14) comprises metal, in particular aluminum.

15. The skid-type landing gear (10) of any one of the preceding claims,
wherein the connecting component (17) comprises metal, in particular aluminum, and/or composite material, in particular a carbon fiber reinforced polymer.

16. A rotorcraft (1) with a skid-type landing gear (10) according to any one of the preceding claims.
